# EUROPEAN PATENT SPECIFICATION

(11) **EP 1 006 741 B1**
(45) Date of publication and mention of the grant of the patent: **02.04.2003**
(21) Application number: 98440281.8
(22) Date of filing: 04.12.1998
(51) Int. Cl.: H04Q 7/26, H04M 1/66, H04M 1/72

(54) **Method for routing incoming calls in a multi-terminal call system and terminal and base station therefor**
Verfahren für die Leitweglenkung von ankommenden Rufen in einem Vielfach-Endgeräte-Rufsystem und entschprechendes Endgerät und Basisstation dafür
Methode pour diriger un appel entrant dans un system d'appel multi-terminaux et terminal et station de base correspondants

(43) Date of publication of application: 07.06.2000
(73) Proprietor: ALCATEL, 75008 Paris (FR)
(72) Inventor: Moisset, Eric, F-67230 Benfeld (FR)
(74) Representative: Brose, Gerhard, Dipl.-Ing.

(56) References cited:
- EP-A- 0 533 510
- WO-A-97/28631
- "AUDIBLE BALLER ID" IBM TECHNICAL DISCLOSURE BULLETIN, vol. 39, no. 10, October 1996, page 35 XP000631314

## Description

The invention concerns a method for routing incoming calls in a multi-terminal call system having a base station, the method comprising storing selected incoming call identifiers in association with specific terminal identifiers in a base station memory, determining whether an incoming call originates from a selected incoming call identifier stored in the base station memory, and routing the incoming call to a specific terminal. The method also concerns a terminal connectable to a base station of a multi-terminal call system, the terminal comprising a key pad and a terminal memory, as well as a base station of a multi-terminal call system comprising a processor for storing selected incoming call identifiers and associated terminal identifiers in a base station memory, and for routing selective incoming calls to a selected terminal or terminals.

Multi-terminal call systems are, generally speaking, systems having at least one central access number and a plurality of handsets or terminals generally connected in parallel to a base station. Such multi-terminal call systems can have terminals connected to the base station through cables or through wire-less connections. A simple example of such multi-terminal systems is a plurality of telephones in a private household having one common external access number or a cordless telephone system within a private household having a plurality of handsets.

A general feature of such conventional systems is that incoming calls are normally routed to all handsets or terminals in the systems, wherein all terminals and handsets ring simultaneously in response to an incoming call. Since, however, the different handsets or terminals are generally located in different parts of the building in which the multi-terminal call system is installed, different users are normally associated with different terminals. It is therefore often the case that an incoming call is nearly invariably directed to a person normally using a particular terminal or handset. For such common calls, all users of all handsets are informed of an incoming call although the call was only likely to be directed to one particular user of one particular handset. As a result, all users of all handsets are often disturbed by incoming calls intended for only one handset.

WO 98/03004 discloses a multi-terminal call system of the above mentioned kind which attempts to address this problem. In particular, this publication discloses a cordless multi-terminal system having a central call processor and a controller. The cordless terminals of the system are adapted to communicate with the base station or, if out of range thereof, directly with mobile telephone cellular systems. The controller is programmable by a remote keyboard to download specific mapping instructions to a call processor in which particular call line identifiers are stored within the call processor in association with particular handsets or terminals. When an incoming call is received by the call processor, the call processor checks its internal memory for correlation between this call line identifier and information stored therein. Should the call processor find an entry associating this particular call line identifier with a particular handset, the call processor automatically routes this call to the associated handset. In this manner, certain calls are automatically routed to a particular handset such that other handsets not likely to be interested or relevant to the incoming call remain unrouted and undisturbed by the call.

The system of WO98 03004 partially addresses the problem of prior art and prevents, under certain circumstances, all handsets from ringing in the event that only a particular handset is likely to be of interest. However, the system described in WO98 03004 can only associate particular hand sets or terminals with particular incoming calls using a centrally programmed call processor. In addition, should users of particular handsets wish to change correlations between incoming calls and target handsets, such changes can only be registered in the call processor through central programming via the remote key board.

In view of these disadvantages of prior art, it is the purpose of the present invention to develop a method and an apparatus for the routing of incoming calls within a multi-terminal call system which allows for a simple and user-friendly programming of a correlation between the incoming call and the target terminal or terminals.

This purpose is achieved in accordance with the method of the invention by storing, in each of a plurality of terminals, incoming call identifiers in a terminal memory of a respective terminal and by communicating those store identifiers along with an associated terminal identifier to the base station for storage in the base station memory in the form of selected incoming call identifiers.

The method in accordance with the invention thereby provides for a decentralized intelligence approach to programming of the multi-terminal call system. Instead of requiring centralized programming by means of a remote keyboard of the correlation in the base station between the incoming call identifier and the target terminal or handset, the method in accordance with the invention permits each separate handset user to program his own individual list of desired identifiers and to communicate this desired list to the central base station. In particular, the method in accordance with the invention facilitates simplified change of the entries in the base station memory. Should a handset user remap or realign his list of internal preferred numbers, the method in accordance with the invention allows each individual user to do so at his discretion and to reallocate the memory locations in the base station correlating the incoming call identifiers with the target terminal or handset. No external programming keyboard is required in order to reassign the correlation between incoming calls and target terminals, and each individual user of each particular handset can determine and change his allocations at his discretion.

An improvement of the method in accordance with the invention provides that the incoming call identifiers are stored in a terminal storage location occupied by stored frequently used outgoing call numbers. This improvement has the advantage that the frequently used outgoing call numbers, generally stored by the user in his handset for rapid recall of frequently called numbers likewise serve as the list of incoming call identifiers supplied by the handset to the central base station. This list might be programmed by the user, for example as a personal directory, or collected automatically by the handset, which monitors frequently used numbers dialed by the user. In fact, this list of frequently called outgoing call numbers is also likely to be the most appropriate list of incoming calls targeted for that particular handset. In this manner, a single programming of the handset satisfies both the routing for rapid outgoing calls to frequently used numbers as well as the routing for incoming calls to the handset most likely to be interested in receiving that call.

In an improvement of the method, selected incoming calls are routed with a predetermined identification at the selected terminal. This improvement allows the user of the selected terminal to recognize an incoming routed call prior to actually speaking with the calling party such that the user of this terminal can immediately judge the priority of an incoming call prior to receiving the call or initiating the conversation.

In a variation of this particular improvement, the predetermined identification at the selected terminal is an acoustical signal. This particular improvement has the advantage that, for example, a ringing signal which differs from a normal ringing signal can be utilized to identify an incoming routed call. In this manner, the user of the target terminal can recognize an internally routed call, likely to come from a party which he himself frequently calls and communicates with without having to look at e.g. a display on his handset.

A particular advantageous aspect of the invention involves providing the method with a step of routing a selected incoming call to a plurality of terminals if a selected specific terminal fails to indicate acceptance of said routed incoming call within a specific acceptance time. This particular improvement has the advantage of decreasing the probability that an incoming routed call remains unanswered in the event that the most likely user of the most likely handset targeted by the incoming call is not available to receive that call.

The purpose of the invention is also solved by a terminal connectable to a base station of a multi-terminal call system comprising means for storing incoming call identifiers in a terminal memory and having means for communicating the terminal identifier and associated incoming call identifiers to the base station for storage in the base station memory. This terminal in accordance with the invention has the advantage of providing a user-friendly method for programming the routing of incoming calls which allows the user of a particular handset or terminal to determine and to change his preferred list of incoming call routings in a decentralized fashion.

In an improvement of this terminal, the storage means of the terminal operate in response to key pad instructions entered by the user. This feature has the advantage of allowing the user to program his memory as well as download his programmed memory and/or memory changes to the base station simply by selected strokes on his key pad.

The purpose of the invention is also achieved in conjunction with a base station for a multi-terminal call system, characterized in that the processor of the base station comprises means for storing incoming call identifiers in response to incoming call identifiers stored in individual terminals and transferred from these individual terminals to the base station.

Further advantages of the invention can be extracted from the description of the accompanying drawings given below in association with a preferred embodiment thereof. This embodiment and its description are exemplary only and do not represent an exhaustive enumeration of inventive configurations. In general, the features disclosed in the drawings and described in connection with the preferred embodiment can be used together in various combinations within the scope of the invention as claimed.
- Fig. 1:: shows a schematic view of a multi-terminal system in accordance with the invention;
- Fig. 2:: shows a detailed drawing of the base station portion of the multi-terminal user system in accordance with Fig. 1;
- Fig. 3:: shows a detail of one particular terminal for use in the multiterminal system in accordance with Fig. 1;
- Fig. 4a:: schematically shows a first memory of a first terminal of the multi-terminal system of Fig. 1;
- Fig. 4b:: shows a second memory of a second terminal of the multiterminal system;
- Fig. 4c:: shows a memory of an nth terminal of a multi-terminal system; and
- Fig. 5:: shows a schematic view of the base station memory of the multi-terminal call system in accordance with the invention.

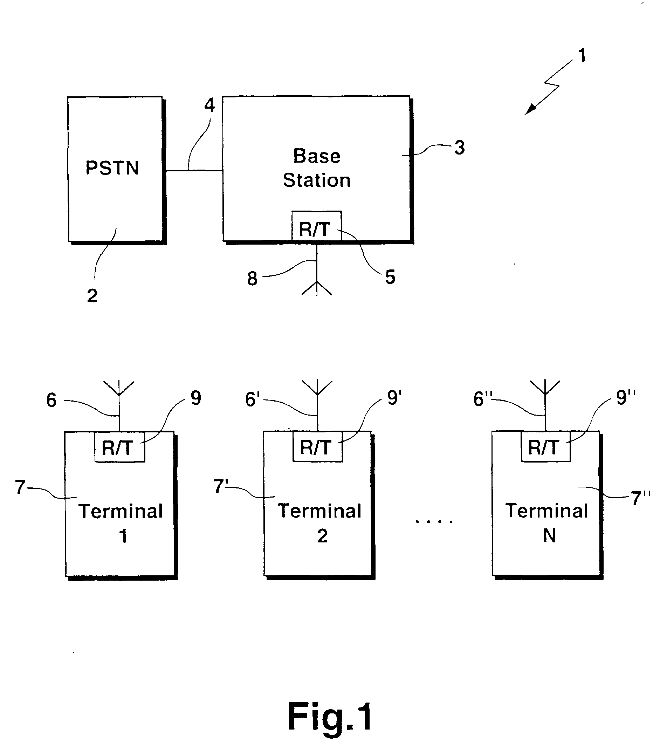

The multi-terminal call system in accordance with the invention as illustrated in Fig. 1 comprises a base station 3 connected via a cable connection 4 to a public switched telephone network 2 and having n terminals 7, 7',..., 7" of which only a first, second, and nth terminal are illustrated in the figure. The base station comprises a radio frequency transmitter/receiver 5 for communication with a plurality of cordless terminals 7, 7',..., 7" of the n-terminal system via antenna 8. This particular embodiment preferentially represents a cordless telephone system of a PABX user (PABX = private automatic branch exchange). The invention, however, also applies to hardwired systems, particular for PABX users.

Fig. 1 shows a first terminal 7, a second terminal 7' and an nth terminal 7" of the system. Each terminal has its own antenna 6, 6', 6" connected to respective transmitter/receivers 9, 9', 9" for communication with the base station 3. Both the base station transmitter/receiver 5 and the terminal transmitter/receivers 6, 6', 6" comprise conventional radiofrequency electronics not explicitly illustrated.

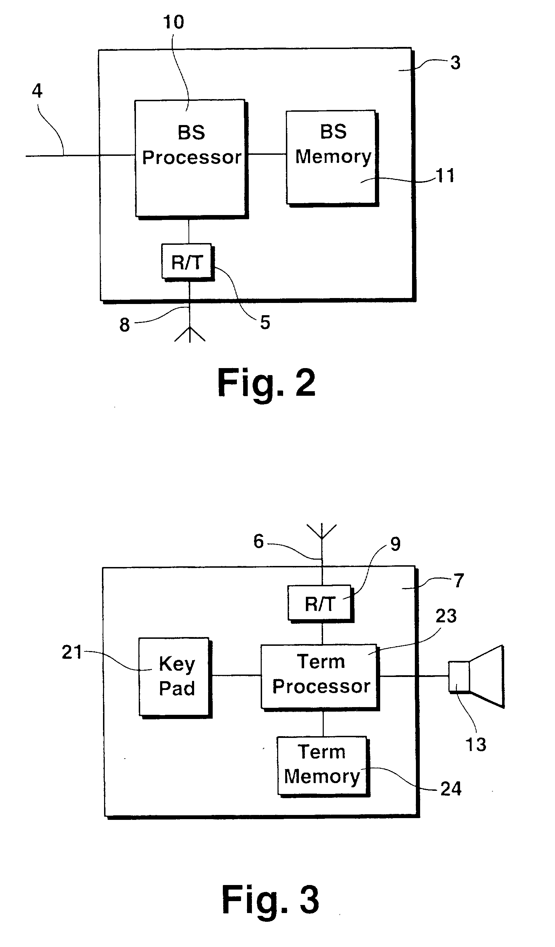

Fig. 2 shows a more detailed sketch of the base station illustrating features pertinent to the invention. The incoming cable 4 from the public station telephone network 2 connects directly to a base station processor 10. The base station processor communicates with base station memory 11 as well as with the base station transmitter/receiver 5. The processor 10 accepts analogue and/or digital signals coming from the network 2 and translates these signals into appropriate digital signals for internal use within the multi-terminal system. The transmitter/receiver 5 receives digital signals exported by the base station processor 10 to generate radio frequency signals delivered to antenna 8. The transmitter/receiver 5 thereby comprises conventional means for conversion of outgoing digital instructions from the processor 10 into associated radio signals for interpretation by the terminals 7, 7',..., 7" as well as conventional electronics for converting radio signals received from the terminals 7, 7',..., 7" into appropriate digital signals for internal use by the base station processor 10. The base station memory 11 communicates with the base station processor 10 to accept downloaded storage instructions therefrom.

Fig. 3 shows a somewhat more detailed sketch of a particular terminal 7. All terminals 7, 7' and 7" illustrated in Fig. 1 are, in this embodiment, considered to be of the same construction. The handset 7 of Fig. 3 comprises a key pad 21 communicating with a terminal processor 23. The terminal processor 23 is connected to a receiver/transmitter 9 as well as to a terminal memory 24. The receiver/transmitter 9 communicates radio frequency signals to the antenna 6 and receives signals therefrom and comprises conversion circuitry for appropriate analog/digital conversion for internal use by the terminal 7. The terminal processor 23 is adapted to accept key pad stroke instructions 21 entered by a user in order to download memory storage instructions into the memory 24 and/or to generate radio frequency signals via transmitter 9 for radiation by antenna 6. The terminal processor is also connected to a loud speaker for generating an acoustical signal to the user.

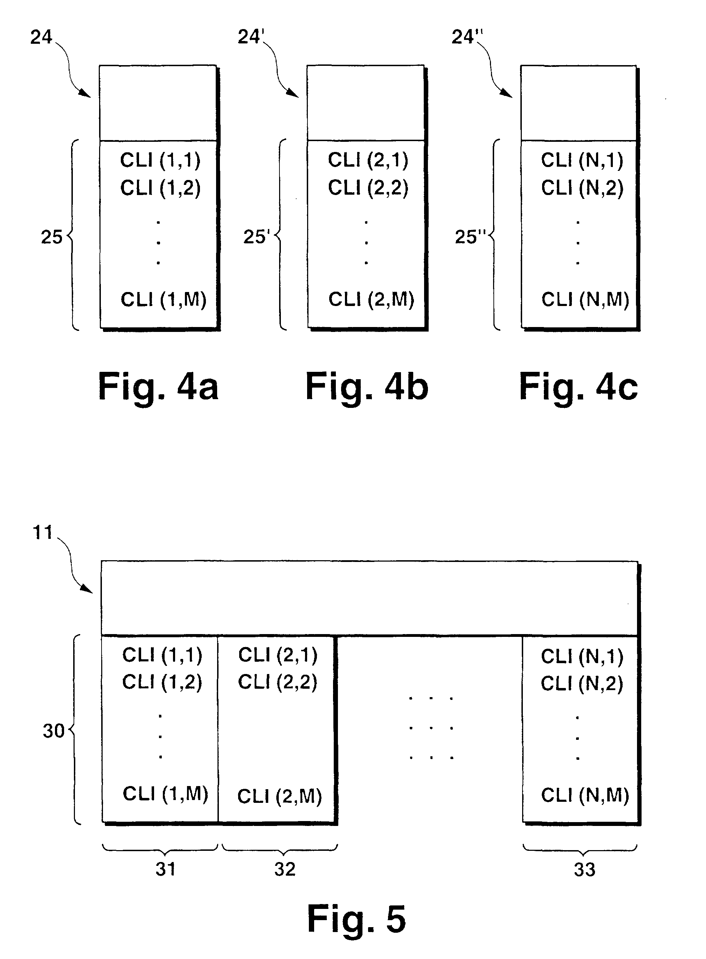

Figs. 4a, 4b and 4c sketch memory locations 24, 24', 24" appropriate to the invention for a first terminal 7' (Fig. 4a), a second terminal 7' (Fig. 4b), and an nth terminal 7" (Fig. 4c). The relevant portions of the memories 24, 24', 24" are illustrated by memory sections 25, 25', and 25" in Figs. 4a, 4b, and 4c respectively. Referring to Fig. 4a, memory section 25 comprises a list, CLI(1,1) to CLI(1,m) of m incoming call identifiers (for example calling line identifiers) selected by the user of terminal 7 for storage in memory 24, e.g., as a personal directory of the user. Each entry is labelled with two numbers, the first number (in the case of Fig. 4a the number "1") indicating a terminal number, and a second number indicating a particular identifier associated with a particular call identifier number. In the embodiment shown in Figs. 4a through 4c, m incoming call identifiers can be stored in each terminal. In Fig. 4b the memory 24' of handset 7' is associated with identifier number "2" so that the stored incoming call numbers identified by the list extend from CLI (2,1) to CLI (2,m) and are indexed with the number "2". Fig. 4c shows the general case of terminal number "n" having a series of "m" storing locations.

Fig. 5 shows the corresponding storage location of the base station memory 11 following programming by the individual terminals 7, 7', 7" of the system for routing of selected incoming calls. The base station memory 11 comprises a memory section 30 consisting of particular memory sections 31, 32 and up to and including memory section 33. These memory portions 31 and 32 through 33 are correlated with information originally programmed in the corresponding sections 25, 25', 25'' of Figs. 4a, 4b, and 4c associated with the terminals 7, 7', and 7" respectively. In the example shown in Fig. 5, the correlation between the incoming calls and the target terminal 7, 7', 7" is indicated as a simple 2x2 matrix extending from entry 1,1 to entry n,m respectively. Clearly, embodiments are possible in which data compression for zero locations as well as multiple correlations between a particular incoming call identifier, e.g., a calling line identifier (CLI), and one or more terminals 7, 7', 7" are possible. The system 1, in this event, would then be capable of routing a particular incoming call to one, two, or more selected individual terminals 7, 7', 7" depending on the programming of the central storage location 11 of the base station 3 as downloaded by processor 10.

The system operates as follows. For purposes of clarity, use by only one terminal 7 of the n terminals 7,7',..., 7" will be described in detail. The user of a particular handset 7, enters a list of preferred numbers in his terminal memory 24 using keypad 21. These numbers could also correspond to a list of numbers which the user prefers for rapid execution of outgoing calls. It is, however, also possible for the user to program a separate memory location of his terminal memory 24 to direct the base station to a particular list of incoming calls which differs from his preferred list of outgoing calls. Following programming of his specific list of incoming calls, the user operates the key pad to signal the base station 10 that an update of the stored list is desired. If access allocation is allowed by the base station 10, the receiver/transmitter 9 is then activated by the terminal processor 23 to transfer the list of incoming calls stored in terminal memory 24 via antenna 6 to the base station 3. The base station processor 10 recognizes the list as an update list, and rewrites the new list in base station memory 11, correlating a particular incoming call identifier with the terminal or handset 7 requesting correlation and routing therewith. This process is repeated by the various users of the various handsets 7, 7',..., 7" until the base station memory 11 is filled with the correlation matrix or matrixes uniquely identifying the user terminal or terminals 7, 7', 7" to be routed to in the event of a selected incoming call. In a further embodiment of the invention the base station 10 might request by a cyclic polling the various handsets 7, 7',..., 7" to send information of their lists in the sections 25, 25', 25" of Figs. 4a, 4b, and 4c.

Following programming, and in the event that an incoming call is received by the base station processor 10, the base station processor 10 consults the base station memory 11 for a correlation or correlations between the incoming call identifier and possible target terminal or terminals 7, 7',..., 7" stored in the base station memory 11. In the event that the base station processor 10 finds such a correlation 11, the base station processor 10 instructs the receiver/transmitter 5 to radiate signals for reception by the selected terminal 7 or terminals 7',..., 7". Should no correlation be found in the base station memory 11, the base station processor instructs the base station receiver/transmitter 5 to radiate signals to the plurality of terminals 7, 7',..., 7" for reception by all terminals. Should the target terminal 7 or terminals 7',..., 7" fail to respond to the routed call with a specified amount of time, the base station processor 10 instructs the receiver/transmitter to ring all terminals 7, 7',..., 7".

## Claims

1. Method for connecting incoming calls in a multi-terminal call system (1), the multi-terminal system (1) having a base station (3), the method comprising storing selected incoming call identifiers in association with specific terminal identifiers in a base station memory (11), determining whether an incoming call originates from a selected incoming call identifier stored in the base station memory (11), and routing the incoming call to a specific terminal (7, 7', 7"), **characterized by** storing, in each of a plurality of terminals (7, 7', 7"), incoming call identifiers in a terminal memory (24, 24', 24") of a respective terminal (7, 7', 7"), and communicating these stored identifiers along with an associated terminal identifier to said base station (10) for storage in said base station memory as said selected incoming call identifiers.

2. The method of claim 1, **characterized in that** said incoming call identifiers are stored in a terminal storage location occupied by stored frequently used outgoing call numbers.

3. The method of claim 1 or 2, **characterized in that** said multi-terminal system is a Private Automatic Branch Exchange , referred to as PABX.

4. The method of any one of the preceding claims, **characterized in that** said base station is a cordless telecommunication base station.

5. The method of claim 4, **characterized in that** said base station is a Digital Enhanced Cordless Telecommunication, deferred to as DECT base station.

6. The method of any one of the preceding claims, **characterized in that** the selected incoming calls are routed with a predetermined identification at the selected terminal (7, 7', 7").

7. The method of claim 6, **characterized in that** said predetermined identification at the selected terminal (7, 7', 7") is a particular acoustical signal.

8. The method of any one of the preceding claims, further **characterized by** the step of routing a selected incoming call to a plurality of terminals (7, 7', 7") if a selected specific terminal (7, 7', 7") fails to indicate acceptance of said routed incoming call within a specified acceptance time.

9. A terminal (7, 7', 7") connectable to a base station (3) of a multi-terminal call system (1), the terminal (7, 7', 7") comprising a key pad (21) and a terminal memory (24), **characterized by** means (23) for storing incoming calls identifiers in said terminal memory (24) indexed with a terminal identifier and means far communicating the terminal identifier and said stored incoming call identifiers to said base station (3) for storage in a related base station memory section (30).

10. The terminal of claim 9, further **characterized by** means (23) responsive to selected incoming calls routed by said base station (31) to said terminal (7, 7', 7") for identifying a ranted call.

11. The terminal of claim 10, **characterized in that** said responsive means (23) for identifying a routed call generate an acoustical signal.

12. The terminal of any one of the claims 9 through 11, **characterized in that** said storage means (23) and said communication means (23) operate in response to key pad instructions entered by a user.

13. The terminal of any one of the claims 9 through 12, **characterized in that** said incoming call identifiers are stored in a terminal storage location (25, 25', 25") occupied by stored frequently used outgoing call numbers.

14. The terminal of any one of the claims 9 through 13, **characterized in that** said terminal is a Private Automatic Branch Exchange, referred to as PABX terminal.

15. A terminal of any one of the claims 9 through 14, **characterized in that** said terminal is a cordless telecommunication terminal.

16. A base station (3) of a multi-terminal call system (1), the base station (3) comprising a processor (10) for storing selected incoming call identifiers and associated terminal identifiers in a base station memory (11), and for routing selective incoming calls to a selected terminal or terminals (7, 7', 7"), **characterized in that** said processor (10) comprises means ( 11) for storing incoming call identifiers stored in individual terminals (7, 7', 7") and transferred from said individual terminals (7, 7', 7") to the base station ( 3) with the terminal identifier, the means having section for storing terminal and call identifiers for individual terminals.

17. The base station (3) of claim 16, **characterized in that** said base station (3) is a Private Automatic Branch Exchange, referred to as PABX base station (3).

18. The base station (3) of any one of the claims 16 or 17, **characterized in that** said base station (3) is a cordless telecommunications base station (3).

19. The base station (3) of any one of the claims 16 through 18, **characterized in that** the selected incoming calls are routed with a predetermined identification at the selected terminal (7, 7', 7").

20. The base station of claim 19, **characterized in that** said predetermined identification of said selected terminal (7, 7', 7") is an acoustical signal.

21. The base station (1) of any one of the claims 16 through 20, wherein said selected incoming call is routed to a plurality of terminals (7, 7', 7"), if a selected terminal (7, 7', 7") fails to indicate acceptance of said routed incoming call within a specified acceptance time.

## Patentansprüche

1. Ein Verfahren zur Durchschaltung ankommender Rufe in einem Vielfach-Endgeräte-Rufsystem (1), wobei das Vielfach-Endgeräte-System (1) eine Basisstation (3) hat und das Verfahren die Schritte der Speicherung ausgewählter Kennungen ankommender Rufe in Verbindung mit speziellen Endgeräte-Kennungen in einem Basisstations-Speicher (11) umfasst, die Bestimmung, ob ein ankommender Ruf von einer ausgewählten Kennung ankommender Rufe stammt, die im Basisstations-Speicher (11) gespeichert ist, und die Leitweglenkung des ankommenden Rufs an ein spezielles Endgerät (7, 7', 7"), **dadurch gekennzeichnet, dass** in jedem Endgerät einer Vielzahl von Endgeräten (7, 7', 7") Kennungen ankommender Rufe in einem Endgeräte-Speicher (24, 24', 24") eines entsprechenden Endgerätes (7, 7', 7") gespeichert werden und dass diese gespeicherten Kennungen zusammen mit einer zugehörigen Endgeräte-Kennung an die Basisstation (10) zur Speicherung im Basisstations-Speicher als ausgewählte Kennungen ankommender Rufe übertragen wird.

2. Das Verfahren aus Anspruch 1, **dadurch gekennzeichnet, dass** die Kennungen ankommender Rufe in einem Endgeräte-Speicherbereich gespeichert werden, der durch häufig benutzte abgehende Rufnummern belegt ist.

3. Das Verfahren aus Anspruch 1 oder 2, **dadurch gekennzeichnet, dass** das Vielfach-Endgeräte-System eine Nebenstellenanlage ist, die auch als PABX (Private Automatic Branch Exchange) bezeichnet wird.

4. Das Verfahren aus einem beliebigen der vorherigen Ansprüche, **dadurch gekennzeichnet, dass** die Basisstation eine Basisstation zur schnurlosen Telekommunikation ist.

5. Das Verfahren aus Anspruch 4, **dadurch gekennzeichnet, dass** die Basisstation eine DECT-Basisstation (Digital Enhanced Cordless Telecommunication) ist.

6. Das Verfahren aus einem beliebigen der vorherigen Ansprüche, **dadurch gekennzeichnet, dass** die Leitweglenkung der ausgewählten ankommenden Rufe mit einer vorher festgelegten Identifikation beim ausgewählten Endgerät (7, 7', 7") erfolgt.

7. Das Verfahren aus Anspruch 6, **dadurch gekennzeichnet, dass** die vorher festgelegte Identifikation beim ausgewählten Endgerät (7, 7', 7") ein bestimmtes akustisches Signal ist.

8. Das Verfahren aus einem beliebigen der vorherigen Ansprüche, weiterhin durch den Schritt gekennzeichnet, dass ein ausgewählter ankommender Ruf an eine Vielzahl von Endgeräten (7, 7', 7") geleitet wird, wenn ein spezielles Endgerät (7, 7', 7") das Annehmen des geleiteten ankommenden Rufs nicht innerhalb einer bestimmten Akzeptanzzeit anzeigt.

9. Ein Endgerät (7, 7', 7"), das an eine Basisstatiön (3) eines Vielfach-Endgeräte-Rufsystems (1) angeschlossen werden kann, wobei das Endgerät (7, 7', 7") ein Tastenfeld (21) und einen Endgeräte-Speicher (24) umfasst, **gekennzeichnet durch** Mittel (23) zur Speicherung jeder Kennung ankommender Rufe im Endgeräte-Speicher (24), die **durch** eine Endgeräte-Kennung indiziert sind und **durch** Mittel zur Übertragung der Endgeräte-Kennung und der gespeicherten Kennungen ankommender Rufe zur Basisstation (3), um sie in einem zugehörigen Basisstations-Speicher-Abschnitt (30) zu speichern.

10. Das Endgerät aus Anspruch 9, weiterhin durch Mittel (23) gekennzeichnet, die auf ausgewählte ankommende Rufe reagieren, die von der Basisstation (31) an das Endgerät (7, 7', 7") geleitet wurden, um einen geleiteten Ruf zu erkennen.

11. Das Endgerät aus Anspruch 10, **dadurch gekennzeichnet, dass** die reagierenden Mittel (23) zur Erkennung eines geleiteten Rufs ein akustisches Signal erzeugen.

12. Das Endgerät aus einem beliebigen der Ansprüche 9 bis 11, **dadurch gekennzeichnet, dass** die Speichermittel (23) und die Kommunikationsmittel (23) in Reaktion auf vom Benutzer über das Tastenfeld eingegebene Instruktionen arbeiten.

13. Das Endgerät aus einem beliebigen der Ansprüche 9 bis 12, **dadurch gekennzeichnet, dass** die Kennungen ankommender Rufe in einem Endgeräte-Speicherbereich (25, 25', 25") gespeichert werden, der durch gespeicherte, häufig benutzte Rufnummern abgehender Rufe belegt ist.

14. Das Endgerät aus einem beliebigen der Ansprüche 9 bis 13, **dadurch gekennzeichnet, dass** das Endgerät ein System-Endgerät einer Nebenstellenanlage ist, die auch als PABX (Private Automatic Branch Exchange) bezeichnet wird.

15. Ein Endgerät aus einem beliebigen der Ansprüche 9 bis 14, **dadurch gekennzeichnet, dass** das Endgerät ein Endgerät zur schnurlosen Telekommunikation ist.

16. Eine Basisstation (3) eines Vielfach-Endgeräte-Rufsystems (1), wobei die Basisstation (3) einen Prozessor (10) zur Speicherung ausgewählter Kennungen ankommender Rufe und zugehöriger Endgeräte-Kennungen in einem Basisstations-Speicher (11) umfasst, und zur Leitweglenkung ausgewählter ankommender Rufe an ein spezielles Endgerät oder an spezielle Endgeräte (7, 7', 7"), **dadurch gekennzeichnet, dass** der Prozessor (10) Mittel (11) zur Speicherung der Kennungen ankommender Rufe umfasst, die in einzelnen Endgeräten (7, 7', 7") gespeichert sind und von den Endgeräten (7, 7', 7") zusammen mit der Endgeräte-Kennung an die Basisstation (3) übertragen werden, wobei die Mittel einen Abschnitt zur Speicherung der Endgeräte-Kennung und der Kennung ankommender Rufe für individuelle Endgeräte haben.

17. Die Basisstation (3) aus Anspruch 16, **dadurch gekennzeichnet, dass** die Basisstation (3) eine Basisstation (3) in einer Nebenstellenanlage ist, die auch als PABX (Private Automatic Branch Exchange) bezeichnet wird.

18. Die Basisstation (3) aus einem beliebigen der Ansprüche 16 oder 17, **dadurch gekennzeichnet, dass** die Basisstation (3) eine Basisstation (3) zur schnurlosen Telekommunikation ist.

19. Die Basisstation (3) aus einem beliebigen der Ansprüche 16 bis 18, **dadurch gekennzeichnet, dass** die ausgewählten ankommenden Rufe mit einer vorher festgelegten Identifikation an das ausgewählte Endgerät (7, 7', 7") geleitet werden.

20. Die Basisstation aus Anspruch 19, **dadurch gekennzeichnet, dass** die vorher festgelegte Identifikation beim ausgewählten Endgerät (7, 7', 7") ein akustisches Signal ist.

21. Die Basisstation (1) aus einem beliebigen der Ansprüche 16 bis 20, wobei der ausgewählte ankommende Ruf an eine Vielzahl von Endgeräten (7, 7', 7") geleitet wird, wenn ein ausgewähltes Endgerät (7, 7', 7") das Annehmen des geleiteten ankommenden Rufs nicht innerhalb einer bestimmten Akzeptanzzeit anzeigt.

## Revendications

1. Procédé pour connecter des appels entrants dans un système d'appel à terminaux multiples (1), le système à terminaux multiples (1) comportant une station de base (3), le procédé comprenant la mémorisation d'identificateurs d'appels entrants sélectionnés en association avec des identificateurs de terminaux spécifiques dans une mémoire de station de base (11), la détermination du fait qu'un appel entrant correspond ou non à un identificateur d'appel entrant sélectionné mémorisé dans la mémoire de station de base (11), et l'acheminement de l'appel entrant vers un terminal spécifique (7, 7', 7''), **caractérisé par** la mémorisation, dans chacun d'une pluralité de terminaux (7, 7', 7''), d'identificateurs d'appels entrants dans une mémoire de terminal (24, 24', 24'') d'un terminal respectif (7, 7', 7'') et la communication de ces identificateurs mémorisés avec un identificateur de terminal associé à ladite station de base (10) pour mémorisation dans ladite mémoire de station de base en tant que dits identificateurs d'appels entrants sélectionnés.

2. Procédé selon la revendication 1, **caractérisé en ce que** lesdits identificateurs d'appels entrants sont mémorisés dans un emplacement de mémoire de terminal occupé par des numéros d'appels sortants mémorisés fréquemment utilisés.

3. Procédé selon la revendication 1 ou 2, **caractérisé en ce que** ledit système à terminaux multiples est un autocommutateur privé, appelé PABX.

4. Procédé selon l'une quelconque des revendications précédentes, **caractérisé en ce que** ladite station de base est une station de base de télécommunications sans fil.

5. Procédé selon la revendication 4, **caractérisé en ce que** ladite station de base est une station de base de télécommunications numériques améliorées sans fil, appelée DECT.

6. Procédé selon l'une quelconque des revendications précédentes, **caractérisé en ce que** les appels entrants sélectionnés sont acheminés avec une identification prédéterminée au niveau du terminal sélectionné (7, 7', 7'').

7. Procédé selon la revendication 6, **caractérisé en ce que** ladite identification prédéterminée au niveau du terminal sélectionné (7, 7', 7'') est un signal acoustique particulier.

8. Procédé selon l'une quelconque des revendications précédentes, **caractérisé en outre par** l'étape d'acheminement d'un appel entrant sélectionné vers une pluralité de terminaux (7, 7', 7'') si un terminal spécifique sélectionné (7, 7', 7'') n'indique pas son acceptation dudit appel entrant acheminé dans un temps d'acceptation spécifié.

9. Terminal (7, 7', 7'') pouvant être connecté à une station de base (3) d'un système d'appel à terminaux multiples (1), le terminal (7, 7', 7'') comprenant un clavier (21) et une mémoire de terminal (24), **caractérisé par** des moyens (23) pour mémoriser chaque identificateur d'appel entrant dans ladite mémoire de terminal (24) indexé avec un identificateur de terminal et des moyens pour communiquer l'identificateur de terminal et lesdits identificateurs d'appels entrants mémorisés à ladite station de base (3) pour mémorisation dans une section de mémoire de station de base concernée (30).

10. Terminal selon la revendication 9, **caractérisé en outre par** des moyens (23) sensibles à des appels entrants sélectionnés acheminés par ladite station de base (31) vers ledit terminal (7, 7', 7'') pour identifier un appel acheminé.

11. Terminal selon la revendication 10, **caractérisé en ce que** lesdits moyens sensibles (23) pour identifier un appel acheminé génèrent un signal acoustique.

12. Terminal selon l'une quelconque des revendications 9 à 11, **caractérisé en ce que** lesdits moyens de mémorisation (23) et lesdits moyens de communication (23) agissent en réponse à des instructions entrées à l'aide d'un clavier par un utilisateur.

13. Terminal selon l'une quelconque des revendications 9 à 12, **caractérisé en ce que** lesdits identificateurs d'appels entrants sont mémorisés dans un emplacement de mémoire de terminal (25, 25', 25'') occupé par des numéros d'appels sortants mémorisés fréquemment utilisés.

14. Terminal selon l'une quelconque des revendications 9 à 13, **caractérisé en ce que** ledit terminal est un terminal de système d'autocommutateur privé, appelé PABX.

15. Terminal selon l'une quelconque des revendications 9 à 14, **caractérisé en ce que** ledit terminal est un terminal de télécommunications sans fil.

16. Station de base (3) d'un système d'appel à terminaux multiples (1), la station de base (3) comprenant un processeur (10) pour mémoriser des identificateurs d'appels entrants sélectionnés et des identificateurs de terminaux associés dans une mémoire de station de base (11) et pour acheminer des appels entrants sélectionnés vers un terminal ou des terminaux sélectionnés (7, 7', 7''), **caractérisée en ce que** ledit processeur (10) comprend des moyens (11) pour mémoriser des identificateurs d'appels entrants mémorisés dans des terminaux individuels (7, 7', 7'') et transférés par lesdits terminaux individuels (7, 7', 7'') à la station de base (3) avec l'identificateur de terminal, les moyens comportant une section pour mémoriser des identificateurs de terminal et d'appel pour des terminaux individuels.

17. Station de base (3) selon la revendication 16, **caractérisée en ce que** ladite station de base (3) est une station de base (3) d'autocommutateur privé, appelé PABX.

18. Station de base (3) selon l'une quelconque des revendications 16 ou 17, **caractérisé en ce que** ladite station de base (3) est une station de base de télécommunications sans fil (3).

19. Station de base (3) selon l'une quelconque des revendications 16 à 18, **caractérisée en ce que** les appels entrants sélectionnés sont acheminés avec une identification prédéterminée au niveau du terminal sélectionné (7, 7', 7'').

20. Station de base selon la revendication 19, **caractérisée en ce que** ladite identification prédéterminée au niveau dudit terminal sélectionné (7, 7', 7'') est un signal acoustique.

21. Station de base (1) selon l'une quelconque des revendications 16 à 20, dans laquelle ledit appel entrant sélectionné est acheminé vers une pluralité de terminaux (7, 7', 7'') si un terminal sélectionné (7, 7', 7'') n'indique pas son acceptation dudit appel entrant acheminé dans un temps d'acceptation spécifié.
